# EUROPÄISCHE PATENTSCHRIFT

(11) **EP 2 497 248 B1**
(45) Veröffentlichungstag und Bekanntmachung des Hinweises auf die Patenterteilung: **15.04.2015**
(21) Anmeldenummer: 11716180.2
(22) Anmeldetag: 15.04.2011
(51) Int. Cl.: H04W 12/04, H04L 9/08, H04L 29/06

(54) **VERFAHREN UND VORRICHTUNGEN MIT SCHLÜSSELVERTEILERFUNKTION ZUR VERBESSERUNG VON GESCHWINDIGKEIT UND QUALITÄT EINES HANDOVERS**
METHODS AND DEVICES HAVING A KEY DISTRIBUTOR FUNCTION FOR IMPROVING THE SPEED AND QUALITY OF A HANDOVER
PROCÉDÉ ET DISPOSITIFS COMPRENANT UNE FONCTION DE DISTRIBUTION DE CLÉS POUR AMÉLIORER LA VITESSE ET LA QUALITÉ D'UN TRANSFERT INTERCELLULAIRE

(30) Priorität: 26.04.2010 DE 102010018286
(43) Veröffentlichungstag der Anmeldung: 12.09.2012
(73) Patentinhaber: Unify GmbH & Co. KG, 81379 München (DE)
(72) Erfinder: GAMER, Thomas, 68723 Oftersheim (DE); ROTH, Matthias, 76456 Kuppenheim (DE); BAHR, Michael, 81827 München (DE); SCHWINGENSCHLÖGL, Christian, 85640 Putzbrunn (DE)
(74) Vertreter: Fritzsche, Thomas
(86) Internationale Anmeldenummer: PCT/EP2011/001934
(87) Internationale Veröffentlichungsnummer: WO 2011/134609

(56) Entgegenhaltungen:
- EP-A2- 1 439 667
- WO-A1-2009/154277
- US-A1- 2008 070 577

## Beschreibung

Die Erfindung betrifft einen Schlüsselverteilerknoten für ein Netzwerk, welcher verbunden ist mit ersten und zweiten Zugangsknoten des Netzwerks für ein drahtlos in das Netzwerk eingebundenes Endgerät. Die Erfindung betrifft auch eine Kombination aus dem Knoten und den ersten und zweiten Zugangsknoten. Die Erfindung betrifft auch ein Netzwerk, das diese Kombination und das Endgerät umfasst. Die Erfindung betrifft auch ein Verfahren zur Authentifizierung des Endgeräts in dem Netzwerk und ein Computerprogramm mit Anweisungen entsprechend dem Verfahren. Die Erfindung kann verwendet werden in einer Voice-over-IP-Anwendung und einer Video-on-Demand-Anwendung, insbesondere in einem lokalen Netzwerk, insbesondere WLAN. Die Erfindung kann speziell in Meshnetzen verwendet werden.

Drahtlose Netze finden im Heim- und Office-Bereich zunehmend Verbreitung. Meshnetze sind drahtlose Netze mit flexibler Topologie. Meshfähige Knoten eines Meshnetzes weisen Merkmale zur Erkennung von Topologie-Änderungen oder zum Aufbau von Fallback-Routen auf.

Für das Internet sind Echtzeitanwendungen wie z.B. Voice-over-IP (VoIP) oder Video-on-Demand (VoD) bekannt. Endpunkte einer Echtzeitkommunikation sind gewöhnlich so genannte "Stations" oder "Clients", d.h. nicht meshfähige Endgeräte.

Zur Einbindung in ein Meshnetz müssen sich diese Endgeräte mit Zugangsknoten des Meshnetzes assoziieren. In Erwiderung auf Topologieänderungen des Meshnetzes oder Bewegungen eines Endgeräts über mehrere Funkzellen der Zugangsknoten des Meshnetzes sind dabei Handover-Vorgänge vorgesehen, in denen sich das mit einem Zugangsknoten assoziierte Endgerät mit einem weiteren Zugangsknoten des Meshnetzes neu assoziiert.

Die Geschwindigkeit der Handover-Vorgänge ist speziell für Echtzeitanwendungen entscheidend für Qualität und Ausführbarkeit solcher Echtzeitanwendungen unter Einsatz drahtloser Verbindungen. Um nicht meshfähigen Endgeräten Echtzeitfähigkeit zu ermöglichen, sollen Handover-Vorgänge daher von einem Zugangsknoten zu einem anderen möglichst verzögerungsfrei und ohne Paketverluste ablaufen.

802.11-Netze arbeiten mit stationären Zugangsknoten, die gewöhnlich über drahtgebundene Verbindungen miteinander kommunizieren.

In Meshnetzen ist die Kommunikation zur Schlüsselverteilung zwischen den Zugangsknoten aufgrund der drahtlosen Übertragung unzuverlässiger als bei drahtgebundener Kommunikation und weist aufgrund der Multihop-Kommunikation eine erhöhte Verzögerung auf. Dies resultiert in langsameren Handover-Vorgängen in Meshnetzen. Aufgrund der Mobilität sowohl von Meshknoten als auch von Endgeräten bzw. Stationen finden Handover-Vorgänge in Meshnetzen außerdem häufiger statt. Sowohl die Mobilität von Meshknoten als auch von Endgeräten kann zu einer erhöhten Anzahl an Handover-Vorgängen führen. In Meshnetzen betreiben Zugangsknoten über ein drahtloses Medium eine fehleranfällige Kommunikation, die zusätzlich meist über mehrere drahtlose Hops durchgeführt wird. Eine Anforderung eines PMK-R1-Schlüssels durch einen Zugangsknoten, mit dem sich ein Endgerät neu assoziieren muss, benötigt daher Zeit und der Handover erfährt eine Verzögerung.

Der IEEE 802.11F-Standard zeigt Handover-Mechanismen in 802.11-Netzen und ist dokumentiert in IEEE Trial-Use Recommended Practice for Multi-Vendor Access Point Interoperability via an Inter-Access Point Protocol Across Distribution Systems Supporting IEEE 802.11 Operation, 2003. Er enthält keine Mechanismen zur Optimierung eines Handover-Vorgangs.

Der 802.21-Standard betrifft die Kommunikation und Durchführung eines Handover-Vorgangs zwischen heterogenen Netzen und ist dokumentiert in Standard for Media Independent Handover Services, IEEE Computer Society/Local and Metropolitan Area Networks, Draft 802.21-Standard, 2004.

Eine Beschleunigung der Authentifizierung nach Einleitung eines Handovers zeigt Bruce McMurdo, Cisco Fast Secure Roaming, 2004.

Zur Beschleunigung von Handover-Vorgängen ist die Nutzung mehrerer Interfaces gezeigt in Catherine Rosenberg, Edwin K.P. Chong, Hosame Abu-Amara, Jeongjoon Lee, Efficient Roaming over Heterogeneous Wireless Networks, Proceedings of WNCG Wireless Networking Symposium, 2003. Dazu wird eine Authentifizierung mit dem neuen Zugangsknoten bereits durchgeführt, während die Station über das zweite Interface noch mit dem alten Zugangsknoten verbunden ist.

Eine Standardisierung für schnelle Handover-Vorgänge in drahtlosen 802.11-Netzen ist gezeigt in Draft Amendment to Standard for Information Technology - Telecommunications and Information Exchange between Systems - LAN/MAN Specific Requirements - Part 11: Wireless LAN Medium Access Control (MAC) and Physical Layer (PHY) Specifications: Amendment 2: Fast BSS Transition, D2.0, March 2006.

Zur Optimierung von Handover-Vorgängen wird gemäß dem IEEE 802.11r-Standard in drahtlosen 802.11-Netzen eine spezielle Schlüsselhierarchie genutzt. Diese standardisierte Variante der Schlüsselverteilung, welcher ein Knoten gemäß dem Oberbegriff des Anspruchs 1 angepasst ist, ist derart, dass eine Sicherheitsbeziehung mit dem PMK-RO-Keyholder zuerst beim Mobility Domain Controller (MDC) angefordert werden muss, bevor ein PMK-R1-Schlüssel für den Handover-Vorgang übermittelt werden kann. Dies verzögert den Handover-Vorgang.

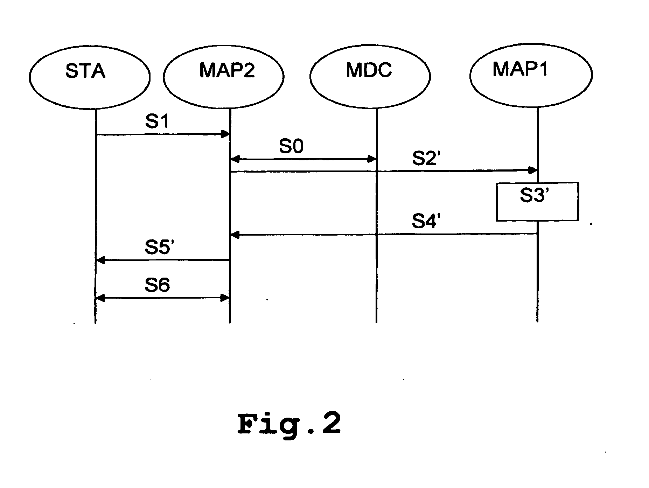

In Fig. 2 ist schematisch eine Kommunikation in einem Handover-Vorgang gemäß dem IEEE 802.11r-Standard veranschaulicht.

Jeder Zugangsknoten berechnet nach seiner initialen Anmeldung innerhalb einer Mobility Domain einen PMK-RO-Schlüssel. Er etabliert mit Hilfe eines Mobility Domain Controllers MDC eine Sicherheitsbeziehung mit einem PMK-RO-Keyholder. Dieser wird nach erfolgreicher Authentifizierung vom ausgehandelten Master Key abgeleitet und ist auf dem Zugangsknoten MAP1, an dem sich der neue Zugangsknoten MAP2 erstmals anmeldet, gespeichert. Dieser Zugangsknoten MAP1 wird auch PMK-R0-Keyholder genannt. Vom PMK-R0-Schlüssel wird anschließend ein so genannter PMK-R1-Schlüssel abgeleitet, welcher die Basis für den Schutz der Kommunikation zwischen Zugangsknoten und einem Endgerät STA bildet.

Der neue meshfähige Zugangsknoten MAP2 erhält einen Authentication Request von dem Endgerät STA, wodurch der Handover-Vorgang eingeleitet wird. Leitet das Endgerät STA in einem Schritt S1 den Handover-Vorgang ein, so etabliert der neue Zugangsknoten MAP2 in einem Schritt S0 mit Hilfe des Mobility Domain Controllers MDC eine Sicherheitsbeziehung mit dem Zugangsknoten MAP1, welcher PMK-RO-Keyholder ist. Bei diesem fordert er in einem Schritt S2' einen "eigenen" PMK-R1-Schlüssel an, welcher als Grundlage für den Schutz der neuen Kommunikationsbeziehung zwischen Endgerät STA und neuem Zugangsknoten MAP2 dient. Dazu leitet der Zugangsknoten MAP1 in einem Schritt S3' von dem PMK-RO-Schlüssel den PMK-R1-Schlüssel ab und versendet in einem Schritt S4' den PMK-R1-Schlüssel an den neuen Zugangsknoten MAP2. Der neue Zugangsknoten MAP2 versendet dann in einem Schritt S5' eine Authentifizierungsantwort an das Endgerät, worauf sich das Endgerät in einem Schritt S6 mit dem neuen Zugangsknoten MAP2 assoziiert, damit der Handover-Vorgang ohne eine erneute Authentifizierung des Endgeräts erfolgreich beendet werden kann.

In US 2008/070577 A1 ist ein Schlüsselmanagementansatz beschrieben für die Sicherung von Kommunikationsübergaben zwischen einem Zugangsterminal und zwei Zugangsknoten. Dieser Ansatz bietet eine sichere Übergabe von Kommunikationen zwischen einem Zugangsterminal und einem Zugangsknoten, ohne eine Enthüllung eines Masterschlüssels für den Zugangsterminal zu riskieren Exposition. Temporäre Masterschlüssel werden für Low-Latency Übergaben und sichere Authentifizierung zwischen einem neuen Zugangsknoten und dem Zugangsterminal abgeleitet. In einem Aspekt wird ein distributives Schlüsselmanagementschema zur Verfügung gestellt, in dem ein aktueller Zugangsknoten einen neuen Sicherheitsschlüssel (basierend auf seinem eigenen Sicherheitsschlüssel) erzeugt, der vom nächsten Zugangsknoten verwendet wird, mit dem ein Zugangsterminal kommuniziert.

Aufgabe der Erfindung ist es, die Geschwindigkeit und/oder Qualität eines Handover-Vorgangs zwischen ersten und zweiten bzw. neuen Zugangsknoten für ein drahtlos in das Netzwerk eingebundenes Endgerät zu verbessern und den Handover-Vorgang zu vereinfachen.

Die Erfindung betrifft dazu einen Schlüsselverteilerknoten für ein Meshnetzwerk, welcher umfasst:
a) eine Speichereinrichtung mit wenigstens einem aus einem Masterschlüssel abgeleiteten ersten Schlüssel für alle in das Meshnetzwerk einzubindenden Endgeräte,
b) wenigstens eine Datenkommunikationseinrichtung zum Datenaustausch mit ersten und zweiten Zugangsknoten für ein drahtlos in das Meshnetzwerk eingebundenes Endgerät,
c) in Verbindung stehend mit der Speichereinrichtung und der Datenkömmunikationseinrichtung, wenigstens einen Prozessor,
   wobei für den/die Prozessor(en) Funktionen vorgesehen sind, um zur Authentifizierung des Endgeräts an dem zweiten Zugangsknoten in Erwiderung auf eine empfangene Schlüsselanfrage von dem zweiten Zugangsknoten,
d) einen zweiten Schlüssel, aus dem in der Speichereinrichtung gespeicherten ersten Schlüssel abzuleiten und
e) ein Versenden des zweiten Schlüssels durch die Datenkommunikationseinrichtung an den zweiten Zugangsknoten auszulösen.

Der Schlüsselverteilerknoten hat erfindungsgemäß Verbindungen zu den ersten und zweiten Zugangsknoten des Meshnetzwerks mit bereits bei Empfang der Schlüsselanfrage von dem zweiten Zugangsknoten aufgebauten Sicherheitsbeziehungen unter Verwendung des ersten Schlüssels.

Der erste Schlüssel kann dabei ein PMK-R0-Schlüssel sein.

Die in Fig. 2 bei S0 dargestellte Kommunikation und damit verbundene Verzögerung von Handover-Vorgängen lässt sich unter Einsatz des erfindungsgemäßen Knotens vermeiden.

Der Schlüsselverteilerknoten kann z.B. ein Authentifizierungsserver sein.

Bei Existenz eines Authentifizierungsservers kann so dieser zur Speicherung der PMK-R0-Schlüssel genutzt werden. PMK-R0-Keyholder wäre in diesem Fall also der Authentifizierungsserver und nicht mehr ein initialer Zugangsknoten. Dies hat den Vorteil, dass der in Fig. 2 gezeigte Mobility Domain Controller MDC zur Etablierung einer Sicherheitsbeziehung mit dem PMK-R0-Keyholder eines Endgeräts nicht mehr benötigt wird und die gesamte Kommunikation zwischen neuem Zugangsknoten und Mobility Domain Controller MDC eingespart werden kann. Dadurch wird die Verzögerung eines Handover-Vorgangs reduziert.

Existiert im Netzwerk bereits ein Authentifizierungsserver, kann dieser also derart erweitert werden, dass der in Fig. 2 gezeigte Mobility Domain Controller MDC überflüssig wird. In diesem Fall wird nicht mehr, wie im IEEE 802.11r-Standard vorgesehen, der initiale Zugangsknoten als PMK-R0-Keyholder genutzt, sondern der Authentifizierungsserver. Dies hat den Vorteil, dass dadurch der Schritt S0 bei der in Fig. 2 veranschaulichten Anfrage eines PMK-R1-Schlüssels entfällt: Die Etablierung einer Sicherheitsbeziehung mit dem PMK-R0-Keyholder. Da der Authentifizierungsserver bei dieser Lösung PMK-RO-Keyholder für alle Stationen ist und jeder Zugangsknoten bereits eine Sicherheitsbeziehung mit dem Authentifizierungsserver besitzt, um dem Netz beitreten zu können, entfällt somit die Etablierung einer Sicherheitsbeziehung mit dem initialen Zugangsknoten. Auf diese Weise wird die gesamte Kommunikation mit dem Mobility Domain Controller MDC eingespart, d.h. sowohl die Verzögerung als auch der Bandbreitenbedarf im Fall eines Handovers werden reduziert.

In einer Ausführung ist der Schlüsselverteilerknoten ein Knoten eines Meshnetzwerks.

Bei dieser Ausführung müssen nicht alle PMK-R0-Schlüssel auf einer zentralen Instanz hinterlegt werden, welche bei Ausfall eine Störung des gesamten Netzes nach sich zieht. Vielmehr können vorteilhaft PMK-R0-Schlüssel auf mehreren zentralen Instanzen per Replikation hinterlegt sein.

Vor allem in kleineren Meshnetzen kann es zudem vorteilhaft sein, Hardwareressourcen wie einen Authentifizierungsserver zu sparen und stattdessen einen ausgezeichneten Knoten zur Schlüsselverteilung vorzusehen. Proprietäre Lösungen, welche die initiale Authentifizierung beispielsweise über technische Merkmale wie die MAC-Adresse eines Endgeräts oder über die physische Installation eines Wurzelschlüssels, z.B. mit Hilfe von USB-Sticks vorsehen, können dabei eingesetzt werden.

Auch in größeren Meshnetzen mit Authentifizierungsserver können solche ausgezeichneten Knoten eingesetzt werden, z.B. derart, dass ein zentraler Knoten für jede Authentifizierung die Rolle des "Authenticators" übernimmt. In solchen Fällen, in denen weitere ausgezeichnete Knoten im Meshnetz existieren, mit denen jeder Knoten in Verbindung steht, ist eine Erweiterung in dem Sinn möglich, dass jene ausgezeichneten Knoten die Rolle des PMK-RO-Keyholders an Stelle eines Authentifizierungsservers übernehmen.

Die ersten und zweiten Schlüssel sind vorteilhaft paarweise symmetrische Schlüssel, auch PMK genannt.

Die Erfindung betrifft auch die Kombination aus wenigstens einem erfindungsgemäßen Schlüsselverteilerknoten und den oben genannten ersten und zweiten Zugangsknoten.

Die ersten und zweiten Zugangsknoten sind in einer vorteilhaften Ausführung der Kombination der Erfindung Knoten des Meshnetzwerks.

Die Kombination der Erfindung kann mit dem Endgerät oder mehreren Endgeräten ein Meshnetzwerk ausbilden.

Ein Verfahren der Authentifizierung des Endgeräts während eines Handover-Vorgangs in dem Meshnetzwerk der Erfindung umfasst die aufeinander folgenden Schritte
S1 Empfangen einer Authentifizierungsanfrage von dem Endgerät des Meshnetzwerks durch den zweiten Zugangsknoten der erfindungsgemäßen Kombination,
S2 Anfordern des zweiten Schlüssels durch den zweiten Zugangsknoten bei dem erfindungsgemäßen Schlüsselverteilerknoten,
S3 Ausführen der Funktionen d) und e)des Schlüsselverteilerknotens der Erfindung,
S4 Versenden des zweiten Schlüssels durch die Datenkommunikationseinrichtung des Schlüsselverteilerknotens an den zweiten Zugangsknoten,
S5 Versenden einer Authentifizierungsantwort durch den zweiten Zugangsknoten an das Endgerät,
S6 Verbinden des Endgeräts mit zweiten Zugangsknoten.

Nach einer Ausführung werden die obigen Schritte S1 - S6 ausgeführt, wenn sich das Endgerät in einem Überlappungsbereich von Funkzellen der ersten und zweiten Zugangsknoten befindet.

Eine Konfigurierung des Knotens mit Speichereinrichtung ist möglich, wobei vor Schritt S1 eine initiale Authentifizierung des ersten und/oder zweiten Zugangsknotens vorteilhaft bei dem Schlüsselverteilerknoten ausgeführt wird, insbesondere durch Speichern des ersten Schlüssels in der Speichereinrichtung.

Ein Computerprogramm mit Anweisungen entsprechend einem erfindungsgemäßen Verfahrens ist auch Teil der Erfindung.

Die Erfindung findet Anwendung in einer Echtzeitnetzwerkanwendung z.B. eine Voice-over-IP-Anwendung oder eine Video-on-Demand-Anwendung und/oder in einem lokalen Netzwerk, insbesondere WLAN.

Aspekte und eine beispielhafte Ausführung der Erfindung werden nachfolgend unter Bezugnahme auf die Figuren beschrieben, in denen:
Fig. 1 einen Schlüsselverteilerknoten schematisch veranschaulicht;
Fig. 2 schematisch eine Kommunikation in einem Handover-Vorgang gemäß dem IEEE 802.11r-Standard veranschaulicht;
Fig. 3 schematisch eine Kommunikation in einem Handover-Vorgang gemäß der Erfindung veranschaulicht;
Fig. 4 ein Netzwerk der Erfindung veranschaulicht.

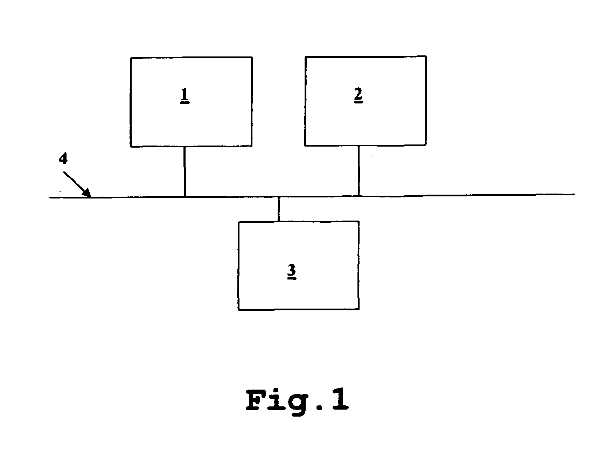

Bei dem in Fig. 1 dargestellten Schlüsselverteilerknoten der Erfindung ist ein Prozessor 3 über einen BUS 4 mit einer Speichereinrichtung 1 und einer Datenkommunikationseinrichtung 2 verbunden.

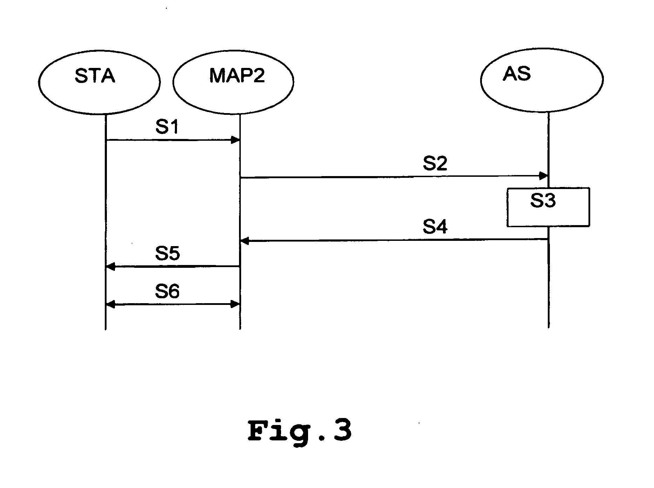

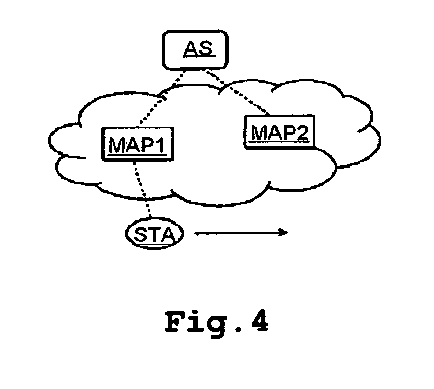

Dieser Schlüsselverteilerknoten dient in einem in Fig. 4 veranschaulichten Netzwerk als Authentifizierungsserver und steht über die Datenkommunikationseinrichtung 2 in Verbindung mit ersten und zweiten Zugangsknoten MAP1, MAP2. Das Netzwerk hat nachfolgend in Verbindung mit den Fig. 3 und 4 beschriebene Schlüsselverteilungs- und Handover-Funktionen.

Fig. 3 veranschaulicht den Ablauf eines Handovers zum oben genannten neuen Zugangsknoten MAP2. Der PMK-R1-Schlüssel wird direkt beim Authentifizierungsserver AS angefordert und anschließend kann der Handover-Vorgang erfolgreich beendet werden. Der Authentifizierungsserver AS ist nur für privilegierte Personen zugänglich und dadurch gut geschützt.

Das in Fig. 4 gezeigte Netzwerk umfasst zwei meshfähige Zugangsknoten, von denen Fig. 3 nur einen, MAP2, veranschaulicht und welche bereits beide beim Beitritt zum Meshnetzwerk beim Authentifizierungsserver AS authentifiziert wurden und daher eine Sicherheitsbeziehung mit diesem besitzen. Ein mobiles Endgerät STA in Form eines Notebooks authentifiziert sich über den Zugangsknoten MAP2, wobei dieser die Authentifizierungsinformationen zum Authentifizierungsserver AS weiterleitet. Dieser führt die Überprüfung der Zugangsberechtigung durch und generiert bei erfolgreicher Authentifizierung des Zugangsknotens einen Masterschlüssel. Aus diesem leitet er den PMK-R0-Schlüssel ab, welchen er in seiner Funktion als PMK-R0-Keyholder lokal speichert. Im Stand der Technik nach dem IEEE 802.11r Standard hätte der initiale Zugangsknoten die Funktion des PMK-R0-Keyholders für die Station übernommen. Im Anschluss an die Speicherung des PMK-RO-Schlüssels generiert der Authentifizierungsserver AS einen PMK-R1-Schlüssel und übermittelt diesen zurück an den anfragenden Zugangsknoten MAP2. Dieser PMK-R1-Schlüssel beinhaltet bestimmte Informationen über den Zugangsknoten MAP2, wie z.B. dessen MAC-Adresse, und bildet dadurch die Grundlage für den Schutz der Kommunikationsbeziehung zwischen dem Zugangsknoten MAP2 und dem nun über den Zugangsknoten MAP2 mit dem Meshnetz assoziierten Endgerät STA.

In der in Fig. 4 gezeigten Topologie des Netzwerks ist das Endgerät mit dem Zugangsknoten MAP1 assoziiert und bewegt sich in Richtung des in Fig. 4 gezeigten Pfeils in eine Funkzelle des Zugangsknotens MAP2. Das Endgerät leitet dazu zu einem bestimmten Zeitpunkt einen Handover-Vorgang von Zugangsknoten MAP1 zu Zugangsknoten MAP2 ein. Die Ermittlung des optimalen Zeitpunkts für einen solchen Handover wird hier als gegeben vorausgesetzt. MAP2 muss nach Einleiten des Handover-Vorgangs durch die Station STA einen PMK-R1-Schlüssel beim PMK-R0-Keyholder des Endgeräts anfordern, um eine Sicherheitsbeziehung mit dem Endgerät etablieren zu können. Hierfür wird zuerst eine Sicherheitsbeziehung zwischen PMK-R0-Keyholder und neuem Zugangsknoten MAP2 benötigt. Im ursprünglichen Standard hätte der neue Zugangsknoten MAP2 eine solche Sicherheitsbeziehung mit dem initialen Zugangsknoten MAP1 beim Mobility Domain Controller MDC anfordern müssen. Erst im Anschluss daran hätte MAP1 einen PMK-R1-Schlüssel an MAP2 übermitteln können. Die vorgeschlagene erfindungsgemäße Lösung reduziert die Kommunikation um eine "Umlaufzeit", da bei dieser Lösung der Authentifizierungsserver AS die Funktion des PMK-R0-Keyholders übernimmt. Der neue Zugangsknoten MAP2 fordert den für den Handover notwendigen PMK-R1-Schlüssel daher beim Authentifizierungsserver AS an, mit welchem er bereits eine Sicherheitsbeziehung besitzt. Die in Fig. 2 veranschaulichte Anfrage nach einer Sicherheitsbeziehung beim MDC entfällt daher. Der Authentifizierungsserver AS übermittelt aufgrund der Anfrage von MAP2 einen für MAP2 spezifischen PMK-R1-Schlüssel an den neuen Zugangsknoten MAP2, welcher als Basis für den Schutz der Kommunikationsbeziehung zwischen MAP2 und dem Endgerät STA dient und damit ermöglicht, den Handover-Vorgang abzuschließen.

Die Authentifizierung umfasst daher die aufeinander folgenden Schritte
S1 Empfangen einer Authentifizierungsanfrage von dem Endgerät STA des Netzwerks durch den zweiten Zugangsknoten MAP2 der erfindungsgemäßen Kombination,
S2 Anfordern des zweiten Schlüssels PMK-R1 durch den zweiten Zugangsknoten MAP2 bei dem Server AS,
S3 Zur Authentifizierung des Endgeräts (STA) an dem zweiten Zugangsknoten MAP2, Ableiten des zweiten Schlüssels aus dem ersten Schlüssel
S4 Versenden des zweiten Schlüssels PMK-R1 an den zweiten Zugangsknoten MAP2,
S5 Versenden einer Authentifizierungsantwort durch den zweiten Zugangsknoten MAP2 an das Endgerät STA,
S6 Assoziieren des Endgeräts STA mit zweiten Zugangsknoten MAP2.

### Spezielle Vorteile von Ausführungen der Erfindung

Bei Existenz eines Authentifizierungsservers kann die Kommunikation mit dem Mobility Domain Controller zur Etablierung einer Sicherheitsbeziehung mit dem PMK-R0-Keyholder einer Station eingespart werden, indem der Authentifizierungsserver, der bereits mit allen Zugangsknoten eine Sicherheitsbeziehung aufgebaut hat, die Verwaltung und Speicherung der PMK-R0-Schlüssel übernimmt. Ein solches Vorgehen vermeidet Verzögerungen bei der Anforderung des für einen Handover-Vorgang benötigten PMK-R1-Schlüssels. Dadurch kann ein Handover-Vorgang in Meshnetzen zusätzlich beschleunigt und Echtzeitanwendungen, wie z.B. Voice-over-IP, können besser unterstützt werden.

### Bezugszeichenliste

- 1: Speichereinrichtung
- 2: Datenkommunikationseinrichtung
- 3: Prozessor
- 4: BUS
- AS: Authentifizierungsserver
- STA: Endgerät
- MAP1: erster Zugangsknoten
- MAP2: zweiter Zugangsknoten
- MDC: Mobility Domain Controller

## Patentansprüche

1. Schlüsselverteilerknoten (AS) für ein WLAN, welcher umfasst:
a) eine Speichereinrichtung (1) mit wenigstens einem aus einem Masterschlüssel abgeleiteten ersten Schlüssel , wobei der erste Schlüssel zur initialen Authentifizierung eines Zugangsknotens in der Speichereinrichtung (1) gespeichert ist,
b) wenigstens eine Datenkommunikationseinrichtung (2) zum Datenaustausch mit ersten und zweiten Zugangsknoten (MAP1, MAP2) für ein drahtlos in das WLAN eingebundenes Endgerät (STA),
c) in Verbindung stehend mit der Speichereinrichtung (1) und der Datenkommunikationseinrichtung (2), wenigstens einen Prozessor (3),
wobei für den/die Prozessor (en) Funktionen vorgesehen sind, um zur Authentifizierung des Endgeräts (STA) an dem zweiten Zugangsknoten (MAP2) in Erwiderung auf eine empfangene Schlüsselanfrage von dem zweiten Zugangsknoten (MAP2),
d) einen zweiten Schlüssel, aus dem in der Speichereinrichtung (1) gespeicherten ersten Schlüssel abzuleiten und
e) ein Versenden des zweiten Schlüssels durch die Datenkommunikationseinrichtung an den zweiten Zugangsknoten (MAP2) auszulösen, wobei der Schlüsselverteilerknoten (AS) Verbindungen hat zu den ersten und zweiten Zugangsknoten (MAP1, MAP2) des WLANs mit bereits bei Empfang der Schlüsselanfrage von dem zweiten Zugangsknoten (MP2) aufgebauten Sicherheitsbeziehungen unter Verwendung des ersten Schlüssels.

2. Schlüsselverteilerknotan (AS) nach Anspruch 1,
**dadurch gekennzeichnet, dass** der Schlüsselverteilerknoten (AS) ein Authentifizierungsserver ist.

3. Schlüsselverteilerknoten (AS) nach Anspruch 1,
**dadurch gekennzeichnet, dass** der Schlüsselverteilerknoten (AS) ein Knoten des WLANs ist.

4. Schlüsselverteilerknoten (AS) nach Anspruch 1,
**dadurch gekennzeichnet, dass** der zweite Schlüssel proprietäre Merkmale des Endgeräts codiert, insbesondere eine MAC-Adresse.

5. Schlüsselverteilerknoten (AS) nach einem der vorhergehenden Ansprüche, **dadurch gekennzeichnet, dass** die ersten und zweiten Schlüssel paarweise symmetrische Schlüssel sind.

6. Schlüssel verteiler knoten (AS) nach einem der vorhergehenden Ansprüche, der in einer Echtzeitnetzwerkanwendung, die insbesondere gewählt ist aus einer Voice-over-IP-Anwendung und einer Video-on-Demand-Anwendung, verwendbar ist.

7. Anordnung aus wenigstens einem Schlüsselverteilerknoten (AS) nach einem der vorhergehenden Ansprüche und den ersten und zweiten Zugangsknoten (MAP1, MAP2).

8. Anordnung nach Anspruch 7, **dadurch gekennzeichnet, dass** die ersten und zweiten Zugangsknoten Knoten des WLANs sind.

9. WLAN, umfassend eine Anordnung nach Anspruch 7 oder 8 und das Endgerät (STA).

10. Verfahren der Authentifizierung des Endgeräts (STA) während eines Handover-Vorgangs in dem WLAN nach Anspruch 9, umfassend die aufeinander folgenden Schritte:
S1 Empfangen einer Authentifizierungsanfrage von dem Endgerät (STA) des WLANs nach Anspruch 9 durch den zweiten Zugangsknoten (MAP2) der Kombination nach Anspruch 7 oder 8,
S2 Anfordern des zweiten Schlüssels durch den zweiten Zugangsknoten (MAP2) bei dem Schlüsselverteilerknoten (AS) nach einem der Ansprüche 1 bis 6,
S3 Ausführen der Funktionen d) und e)des Schlüsselverteilerknotens (AS),
S4 Versenden des zweiten Schlüssels durch die Datenkommunikationseinrichtung an den zweiten Zugangsknoten (MAP2),
S5 Versenden einer Authentifizierungsantwort durch den zweiten Zugangsknoten (MAP2) an das Endgerät (STA),
S6 Assoziieren des Endgeräts mit zweiten Zugangsknoten (MAP2).

11. Verfahren nach Anspruch 10, wobei die Schritte S1 - S6 ausgeführt werden, wenn sich das Endgerät (STA) in einem Überlappungsbereich von Funkzellen der ersten und zweiten Zugangsknoten (MAP1, MAP2) befindet.

12. Verfahren nach Anspruch 10 oder 11, umfassend eine Konfigurierung des Schlüsselverteilerknotens (AS), wobei vor Schritt S1 eine initiale Authentifizierung des ersten und zweiten Zugangsknotens (MAP1) bei dem Schlüsselverteilerknoten (AS) ausgeführt wird.

13. Computerprogramm, **gekennzeichnet durch** Anweisungen entsprechend einem Verfahren nach einem der Ansprüche 10 bis 12.

## Claims

1. Key distributor node (AS) for a WLAN network, comprising:
a) a memory (1) having at least one first key, derived from a master key, wherein the first key is stored in the memory for the initial authentication of an access node in the memory (1),
b) at least one data communication unit (2) for exchanging data with first and second access nodes (MAP1, MAP2) for a terminal (STA) that is wirelessly incorporated into the WLAN network,
c) connected to the memory (1) and the data communication unit (2), at least one processor (3), wherein functions are provided for the processor(s) for authenticating the terminal (STA) at the second access node (MAP2) in response to a key inquiry received from the second access node (MAP2),
d) in order to derive a second key from the first key stored in the memory (1), and
e) to trigger a transmission of the second key by the data communication unit to the second access node (MAP2), wherein the key distributor node (AS) has connections to the first and second access nodes (MAP1, MAP2) of the WLAN network, with security relationships already set up on receipt of the key inquiry by the second access node (MAP2), making use of the first key.

2. Key distributor node (AS) according to claim 1, **characterised in that** the key distributor node (AS) is an authentication server.

3. Key distributor node (AS) according to claim 1, **characterised in that** the key distributor node (AS) is a node of the WLAN network.

4. Key distributor node (AS) according to claim 1, **characterised in that** the second key encodes proprietary features of the terminal, in particular an MAC address.

5. Key distributor node (AS) according to any one of the preceding claims, **characterised in that** the first and second keys are symmetrical keys pair by pair.

6. Key distributor node (AS) according to any one of the preceding claims, which can be used in a real-time network application, which is selected in particular from a voice-over-IP application and a video-on-demand application.

7. Arrangement of at least one key distributor node (AS) according to any one of the preceding claims and the first and second access nodes (MAP1, MAP2).

8. Arrangement according to claim 7, **characterised in that** the first and second access nodes are nodes of the WLAN network.

9. WLAN network, comprising an arrangement according to claim 7 or 8 and the terminal (STA).

10. Method for the authentication of the terminal (STA) during a handover procedure in the WLAN network according to claim 9, comprising the following sequential steps:
S1 Receipt of an authentication inquiry from the terminal (STA) of the WLAN network according to claim 9 by the second access node (MAP2) of the combination according to claim 7 or 8,
S2 Request for the second key by the second access node (MAP2) at the key distributor node (AS) according to one of claims 1 to 6,
S3 Performance of the functions d) and e) of the key distributor node (AS),
S4 Sending of the second key by the data communication unit to the second access node (MAP2),
S5 Sending of an authentication response by the second access node (MAP2) to the terminal (STA),
S6 Association of the terminal with the second access node (MAP2).

11. Method according to claim 10, wherein the steps S1-S6 are carried out when the terminal (STA) is in an overlapping region of radio cells of the first and second access nodes (MAP1, MAP2).

12. Method according to claim 10 or 11, comprising a configuration of the key distributor node (AS), wherein, before step S1, an initial authentication of the first and second access nodes (MAP1) is carried out at the key distributor node (AS).

13. Computer program, **characterised by** instructions corresponding to a method according to any one of claims 10 to 12.

## Revendications

1. Noeud de distribution de clés (AS) pour un WLAN, lequel comprend :
a) un système de mémoire (1) ayant au moins une première clé déduite d'une clé maître, la première clé étant mémorisée pour l'authentification initiale d'un noeud d'accès dans le système de mémoire (1),
b) au moins un système de communication de données (2) pour l'échange de données avec les premier et second noeuds d'accès (MAP1, MAP2) pour un appareil terminal (STA) intégré sans fil dans le WLAN,
c) au moins un processeur (3) en liaison avec le système de mémoire (1) et avec le système de communication de données (2),
des fonctions étant prévues pour le/les processeur(s) afin de, pour l'authentification de l'appareil terminal (STA) dans le second noeud d'accès (MAP2) en réponse à une demande de clé reçue du second noeud d'accès (MAP2),
d) une seconde clé qui peut être déduite à partir de la première clé mémorisée dans le système de mémoire (1) et
e) déclencher un envoi de la seconde clé par le système de communication de données au second noeud d'accès (MAP2), le noeud de distribution de clés (AS) ayant des liaisons aux premier et second noeuds d'accès (MAP1, MAP2) du WLAN avec des relations de sécurité déjà établies dès la réception de la demande de clé du second noeud d'accès (MAP2) à l'aide de la première clé.

2. Noeud de distribution de clés (AS) selon la revendication 1, **caractérisé en ce que** le noeud de distribution de clés (AS) est un serveur d'authentification.

3. Noeud de distribution de clés (AS) selon la revendication 1, **caractérisé en ce que** le noeud de distribution de clés (AS) est un noeud du WLAN.

4. Noeud de distribution de clés (AS) selon la revendication 1, **caractérisé en ce que** la seconde clé code des caractéristiques propriétaires de l'appareil terminal, en particulier une adresse MAC.

5. Noeud de distribution de clés (AS) selon l'une quelconque des revendications précédentes, **caractérisé en ce que** les première et seconde clés sont des clés symétriques deux à deux.

6. Noeud de distribution de clés (AS) selon l'une quelconque des revendications précédentes, qui peut être employé dans une application en temps réel qui est choisie en particulier parmi une application voix sur IP ou une application vidéo sur demande.

7. Dispositif composé d'au moins un noeud de distribution de clés (AS) selon l'une quelconque des revendications précédentes et des premier et second noeuds d'accès (MAP1, MAP2).

8. Dispositif selon la revendication 7, **caractérisé en ce que** les premier et second noeuds d'accès sont des noeuds du WLAN.

9. WLAN, comprenant un dispositif selon la revendication 7 ou 8 et l'appareil terminal (STA).

10. Procédé d'authentification de l'appareil terminal (STA) durant une procédure de transfert intercellulaire dans le WLAN selon la revendication 9, comprenant les étapes successives suivantes :
S1 réception d'une demande d'authentification de l'appareil terminal (STA) du WLAN selon la revendication 9. par le second noeud d'accès (MAP2) de la combinaison selon la revendication 7 ou 8,
S2 demande de la seconde clé par le second noeud d'accès (MAP2) auprès du noeud de distribution de clés (AS) selon l'une quelconque des revendications 1 à 6,
S3 exécution des fonctions d) et e) du noeud de distribution de clés (AS),
S4 envoi de la seconde clé par le système de communication de données au second noeud d'accès (MAP2),
S5 envoi d'une réponse d'authentification par le second noeud d'accès (MAP2) à l'appareil terminal (STA),
S6 association de l'appareil terminal au second noeud d'accès (MAP2).

11. Procédé selon la revendication 10, les étapes S1 à S6 étant exécutées lorsque l'appareil terminal (STA) se trouve dans une zone de recouvrement de cellules hertziennes des premier et second noeuds d'accès (MAP1, MAP2).

12. Procédé selon la revendication 10 ou 11, comprenant une configuration du noeud de distribution de clés (AS), une authentification initiale des premier et second noeuds d'accès (MAP1) étant exécutée avant l'étape S1 dans le noeud de distribution de clés (AS).

13. Programme d'ordinateur, **caractérisé par** des instructions correspondant à un procédé selon l'une quelconque des revendications 10 à 12.
